# EUROPEAN PATENT APPLICATION

(11) **EP 1 292 133 A1**
(43) Date of publication of application: **12.03.2003**
(21) Application number: 01203361.9
(22) Date of filing: 06.09.2001
(51) Int. Cl.: H04N 5/45

(54) **Multi-picture display**

(71) Applicant: Koninklijke Philips Electronics N.V., 5621 BA Eindhoven (NL)
(72) Inventor: The designation of the inventor has not yet been filed
(74) Representative: Steenbeek, Leonardus Johannes

(57) **Abstract**

A circuit capable of handling picture-in-picture, high resolution double window, multi-picture-in-picture with a vertically compressed live main picture and with a live, a long picture-in-picture repay, and scan rate conversion, the circuit comprising first (SUB1) and second (SUB2) field memories for storing and processing a sub video signal (AN SUB, DIG SUB), and an output field memory (MN) for combining outputs of the first (SUB1) and second (SUB2) field memories with a main video signal (AN MN, DIG MN). Preferably, smart switching (LD1, LD2) is used to switch a field memory (SUB2) between compression of the main picture and PIP replay depending on the specification point required.

## Description

The present invention relates to field memory for handling digital television pictures PIP (picture in picture) technology.

Digital television usually involves scan rate conversion that is usually done in the digital domain by writing a field into a field memory and reading it out twice at double speed. This converts a broadcast 50Hz signal to 100Hz. The digital signal can be converted back to analog if necessary.

Several features are expected in digital televisions including picture in picture (PIP) technology which entails displaying a second video source (sub-channel) in a window on top of a first video source (main channel). Multi-picture-in -picture (MPIP) display involves several windows super-imposed on top of a main channel. Double Window (DW) entails displaying the two video sources next to each other (each using half the screen).

PIP replay involves re-running a PIP channel. Each feature required a certain amount of field memory and this is generally expensive and thus there is an advantage to minimizing the amount of field memory required whilst maximizing the features available for maximum customer satisfaction.

In double-window display the main channel provides the display synchronization. However since the sub-channel comes from a different source it differs in timing aspects and can only be displayed with the main channel if it can be delayed up to one field. More usually a delay up to two fields is needed to allow for different vertical synchronization standards such as 50 Hz and 60 Hz, short fields and deviating line frequencies (e.g. from video recorders). Each extra field delay usually requires more field memory.

For high resolution applications it is usual to store 4 successive fields of the sub-channel to prevent line jumps (wrong interlace phases displayed next to each other) and joint line errors (which appear when a display field of one source is composed out of two input fields of that source). It is known that four fields can be stored using 2 field memories if the sub-channel is compressed horizontally by a factor of 2. If PIP is required then the compression is more than a factor of 2 and if the compression is at least a factor of 4 then a single field memory will suffice.

Alternatively only one in a certain number, e.g. one in five fields can be stored and this enables some replay of the PIP. The capacity of the replay facility also depends on the depth of the memory and the size of the PIP.

Multi picture in picture (MPIP) technology allows different sub-channels to be displayed next to each other, although only the main picture and one PIP can be live (the other PIPs are still pictures). It should be noted that vertical compression of the main picture in MPIP is not possible because it is providing the synchronization and cannot therefore be delayed.

It is an object of the invention to provide improved circuitry for PIP. The invention is defined by the independent claims. The dependent claims define advantageous embodiments.

In one embodiment, an additional field memory is needed for effecting the vertical compression and/or the vertical shift in the main channel. As a result, four field memories are needed to allow for one circuit capable of handling picture-in-picture (PIP), high resolution double window (DW), multi picture-in-picture (MPIP) with a vertically compressed live main picture and with a live PIP, a long picture-in-picture replay, and scan rate conversion.

Preferably, smart switching is used to switch a field memory between compression of the main picture and PIP replay depending on the specification point required. This allows one of the field memories to be shared and thus the total number of memories required is three rather than four with attendant cost savings. Preferably, a first tri-stable control circuit, e.g. a tri-state line driver, is connected between a first front end video processor FE1 and a second field memory SUB2, and a second tri-stable control circuit is connected between a second front end video processor FE2 and the second field memory SUB2. This circuit uses a total of only three field memories and allows for MPIP with a compressed main picture, using less field memory than hitherto possible. It also facilitates high-end double window and long record time replay.

The tri-stable control circuits are preferably controlled by the second front-end video processor FE2 so that only one is active at any one time. These circuits provide the necessary static switching circuits but equivalent switches will be well known to persons skilled in the art.

The main field memory MN is shared according to the operation mode. The switching can be static and it is possible to control the switching from the TV's main processor. A suitable discrete component switch would be Philips 74ALVT162827 which is a two bus driver with tri-state control. Alternatively unused pins of the sub processor may be used.

For a better understanding of the present invention and to show how the same may be carried into effect, reference will now be made to the accompanying drawings, in which:
Fig. 1 is a circuit diagram of one embodiment of the invention;
Fig. 2 is a circuit diagram of a second embodiment of the invention;
Fig. 3 is a schematic diagram illustrating a preferred embodiment of the invention; and
Fig. 4 is a circuit diagram of the preferred embodiment of the invention;

The invention relates to scan rate conversion and the use of field memories. It can be combined with different kinds of scan rate conversion, but is here described in combination with a simple way of doing scan-rate up-conversion. The method described is called simple 100 Hz and makes use of field doubling. On top of the scan conversion, one can add different other memory-based features such as PIP, Double Window, Replay or MPIP with compressed main picture (= 2 vertically compressed live-pictures). The need of additional field memories is needed and explained. At the end, the aim of a preferred embodiment of the invention is explained: combine features in a smart way and save memory.

100 Hz scan conversion using field doubling usually is done in the digital domain. The 100 Hz conversion is done by writing a field into a field memory and read it out twice at double speed. If needed, the signal is converted to the analog domain again and is ready to be displayed. Such a simple 100 Hz system is build up basically with one field memory.

The video signal is first entered digital or analog into a Front-End video processor (FE1). This one writes the video signal over a digital bus D1 into the Field Memory (MAIN). Additional control signals such as Write Enable (WE), Input Enable (IE), Reset Write (RSTW) and the Input Clock (CLIN) are provided by the Front-End video processor. They are needed to transfer the digital video data to the memory. The data is then read out by a Back End video processor (BE) and by the means of control signals Read Enable (RE), Output Enable (OE), Reset Read (RSTR) and Output Clock (CLOUT) which has the double frequency of the Input Clock. The control signals of the reading are generated by the Back End video processor. The output of the system is provided by the Back End video processor, and is an up-converted digital or analog 100 Hz video signal.

This basic schematic and the timings of the control signals are not part of the invention and are used here as an application example of the invention. The invention can also be combined with other scan rate converters.

Adding a second Front-End video processor (FE2) and a second Field Memory (SUB1) allows the system to display a Double Window (DW) picture or a Picture In Picture (PIP). DW shows two video sources next to each other, each using half of the screen. PIP means that a second video source is shown in a small window on top of the first source.

One signal is providing the display synchronization and that signal is called the main channel. The second signal is converted to fit next to or over the main channel and is called the sub channel. The sub channel is coming from another source than the main channel. Therefore it has another timing than the main channel. To be able to display the sub channel next to the main channel, the system should be able to delay the sub-channel for at least one field. To be able to cope with different vertical synchronization standards such as 50 Hz and 60 Hz, and to be able to display also short fields and deviating line-frequencies from video recorders, it turns out that in practice two fields are required.

Typical for high-end DW, as DW is treated here in general, is that both pictures are displayed always with the same interlace phase next to each other. Line jumps, when displaying wrong interlace phases next to each other, should never be visible and joint line errors which occur when a display field of one source is composed out of two input fields of that source, should not be present (read pointer crossing write pointer). Therefore, in principle, one needs to be able to store 4 successive fields of your sub channel. If first the sub channel is compressed horizontally by a factor of 2, the 4 fields can be stored using 2 field memories. If PIP is used, the compression of the sub channel is even more than a factor 2. In that case, less memory (only 1 Field Memory if the compression is equal or higher then 4) is needed to store 4 successive fields, or more fields can be stored if 2 Field Memories are used. One could decide not to store all successive fields and to store for instance one out of 5.

Depending of that sub-sample frequency, the depth of the memory and the size of the PIP, one is able to replay some time of the PIP. This is called Replay. When 2 Field Memories are available in the sub channel, the replay time is the double of the time with one Field Memory if the same sub-sample frequency or picture rate is used.

Now both the (horizontally compressed in case of DW) main picture and one out of the 4 fields (or more in case of PIP or Replay) can be combined into the Field Memory MAIN to do scan conversion on the complete picture to be displayed.

When the video source for the sub channel is changed, different sub channels can be displayed next to each other. This is called Multi Picture in Picture (MPIP). However only the main picture and one PIP can be live. The other PIPs are still pictures. It is not possible to compress the main picture in vertical direction, because the main picture is providing the synchronization of the display and can therefore not be delayed (is needed for vertical compression).

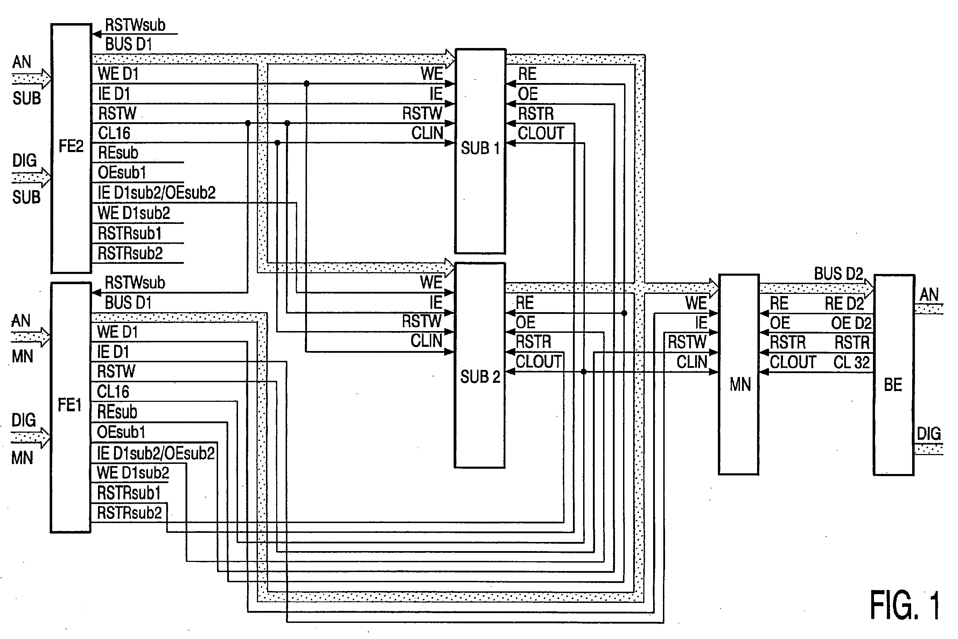

The schematic to realize this setup, in combination with a field doubling scan conversion is shown in Fig. 1. It can also be combined with other scan rate conversion schematics. The timings for writing the sub channel are generated by the Sub Front-End video processor FE2. The timings for writing the main channel, reading both channels and combining both channels into the Main Field Memory for scan rate conversion are generated by the Main Front-End video processor FE1. The Main Front-End video processor can synchronize the sub channel to the main channel because it can watch its writing into the Sub Field Memories by the RSTW control signal.

A small recapitulation tells us that for displaying two sources together on one display, an extra Front End video processor is needed and at least one Sub Field Memory. An extra Sub Field Memory can give a better specification. So for high-end applications, 2 Sub Field Memories are required. In MPIP, the main picture can never be compressed.

In Fig. 1, two front-end processors FE1 and FE2 are shown each receiving input analog or input digital signals. The first front-end video processor FE1 receives analog (AN MN) or digital (DIG MN) main signals. The second front-end video processor FE2 receives analog (AN SUB) or digital (DIG SUB) sub signals and is connected to two sub field memories SUB1 and SUB2. A data output of the two sub field memories SUB1 and SUB2, together with a data output of the first front end processor FE1, provide a data input for a main field memory MN, a data output of which feeds a back end video processor BE from which are fed output analog (AN) and digital (DIG) output signals. This circuit is suitable for high-end double window, picture-in-picture, and replay in combination with field doubling using field memories.

From the moment both main and sub channel need to be compressed, an additional field memory is required for doing the vertical compression and/or vertical shift in the main channel. In the sub channel such a memory was already present because we could use the memory for the synchronization of the sub channel to the main channel for that purpose (SUB1 and optionally SUB2). The memory for doing the scan rate conversion (MN) cannot be used to allow a compression and/or shift in the main picture, because than the problem of crossing pointers would occur. So an additional memory is also required between the Main Front-End video processor (FE2) and the Main Field Memory.

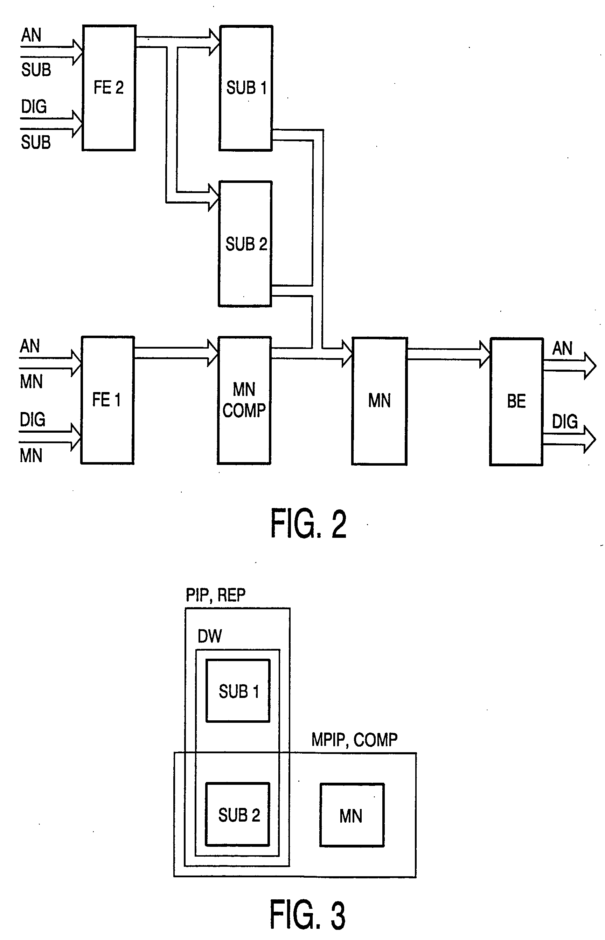

When also the high-end Double Window and long record time Replay are required as described above, we end up with a setup using 4 field memories. The overview is given in Fig. 2, the control signals are equivalent as the ones from Fig. 1.

In Fig. 2, a circuit is shown with two front-end processors FE1 and FE2 each receiving input analog or input digital signals. The first front-end video processor FE1 receives the main analog or digital signals that are fed to a field memory MN COMP. The second front-end video processor FE2 receives the sub-signals and is connected to two sub field memories SUB1 and SUB2. The data output of the two sub field memories SUB1, SUB2, together with a data output of the field memory MN COMP provide the data input for the main field memory MN, the data output of which feeds the back end video processor BE from which are fed output analog and digital output signals. This circuit is suitable for high-end double window, picture-in-picture, long replay and allows for multi-picture-in-picture with compression of the live main picture. This functionality can be combined with field doubling by reading out field memory MN at double speed. Otherwise the connections are the same as in Fig. 1.

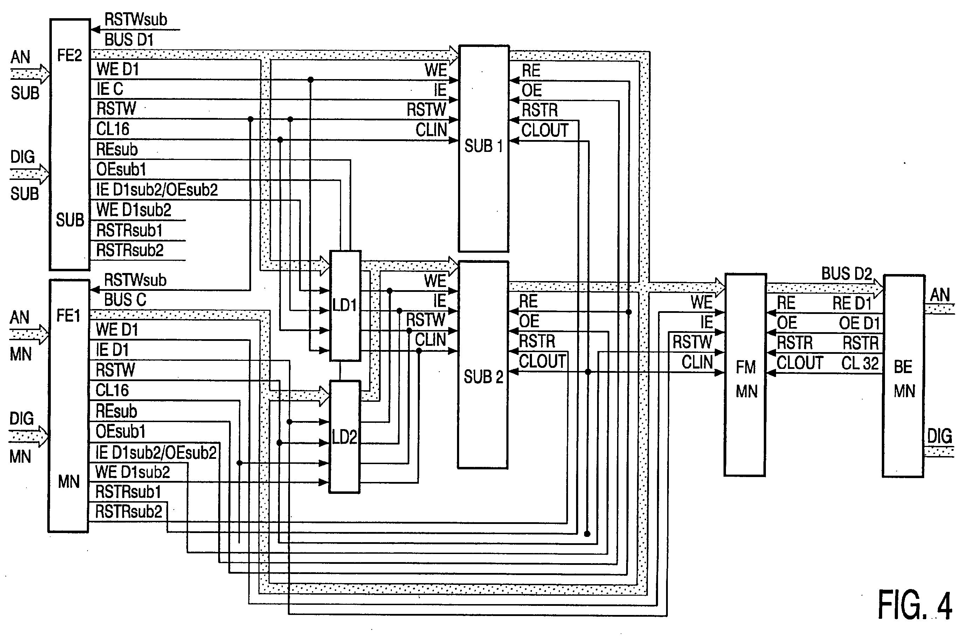

As explained before, a setup with PIP, DW, replay and MPIP with compressed main picture needs 4 Field Memories when the high-end DW is required. It is now the object of a preferred embodiment of the invention that by combining field memories, the same specification can be achieved by sharing a field memory. The shared memory is called SUB2 in Figs. 3, 4 and replaces both memories SUB2 and MAIN COMP from Fig. 2. The data and control signals to the memory can for example be switched by two tri-state line drivers LD1, LD2 controlled by the video processor FE2. Only one line driver is active at a time. When a line driver is active, it can be considered as a closed switch; when it is not active it can be considered as an open switch. However, by what means the switching is achieved does not matter.

The clue is that in one configuration the SUB2 Field Memory can be used for high-end Double Window or long record replay. In the other configuration it is used to have a compressed main picture when you want to do for instance MPIP with a compressed main picture.

The switching is done statically. That means that according to the desired operating mode of the system, the switch has to be put in the proper situation and can remain in that situation until one likes to use another view mode. The position of the switch can be retrieved from Fig. 3 and the table below.

In Fig. 3, three field memories are shown as MN, SUB1 and SUB2 in a way that illustrates that the second field memory SUB2 is shared. It is shared with the first sub field memory SUB1 for double window (DW), PIP and replay (REP), and with the main field memory MN for MPIP and main signal compressed (COMP). Tri-state drivers LD1, LD2 (shown in Fig. 4) are arranged to switch accordingly as illustrated in the following table:

| | **Tri-state Line Driver LD1** | **Tri-state Line Driver LD2** |
|---|---|---|
| **PIP, Replay, high-end DW** | active | not active |
| **MPIP with compressed main picture** | not active | active |

In Fig. 4, the preferred embodiment of Fig. 3 is shown in more detail. Two front-end processors FE1 and FE2 are shown, each receiving analog or digital input signals. The first front end video processor FE1 receives the main analog or digital signals and is connected to both a tri-state driver LD2 and the input of main field memory MN. The second front-end video processor FE2 received the sub signals and is connected to both the first sub field memory SUB1 and a tri-state driver LD1. The outputs of the tri-state drivers LD1 and LD2 are connected to the input field memory SUB2. In that way the line drivers form a switch with two inputs and one output which is connecting or front end video processor FE1 or front end video processor FE2 to the input of field memory SUB2. The switching occurs according to Fig. 3 and provides the circuit of Fig. 4 with the same functionality of the circuit described in Fig. 2, but using less field memory.

In brief, in a setup for PIP, Double Window in which the memories are shared with a feature box to do scan rate conversion, normally 4 field memories would be required to allow PIP, DW, Replay and scan rate conversion with 1 live PIP and a compressed live main picture. Sharing 1 field memory between different modes can save 1 field memory. The invention can be used in a chip set for High End 100 Hz or progressive scan TV. The invention is preferably applied in a picture signal display apparatus, comprising a picture signal processing circuit as described above, and a back-end processor (BE) for retrieving an output signal from the output field memory (MN) to supply the output signal to a display.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A picture signal processing circuit, comprising:
first (SUB1) and second (SUB2) field memories for storing and processing a sub video signal (AN SUB, DIG SUB); and
an output field memory (MN) for combining outputs of said first (SUB1) and second (SUB2) field memories with a main video signal (AN MN, DIG MN).

2. A picture signal processing circuit as claimed in claim 1, further comprising:
a first front-end processor (FE1) for supplying said main video signal (AN MN, DIG MN) and control signals derived therefrom to said output field memory (MN); and
a second front-end processor (FE2) for supplying said sub video signal (AN SUB, DIG SUB) and control signals derived therefrom to said first (SUB1) and second (SUB2) field memories.

3. A picture signal processing circuit as claimed in claim 1, further comprising:
switching means (LD1, LD2) for alternately transferring the main video signal (AN MN, DIG MN) or the sub video signal (AN SUB, DIG SUB) to the second field memory (SUB2).

4. A picture signal display apparatus, comprising:
a picture signal processing circuit as claimed in claim 1; and
means (BE) for retrieving an output signal from said output field memory (MN) to supply the output signal to a display.
